# EUROPÄISCHE PATENTANMELDUNG

(11) **EP 1 340 729 A1**
(43) Veröffentlichungstag der Anmeldung: **03.09.2003**
(21) Anmeldenummer: 02004595.1
(22) Anmeldetag: 28.02.2002
(51) Int. Cl.: C04B 30/02, F16L 59/00

(54) **Wärmedämmformkörper**

(71) Anmelder: E.G.O. ELEKTRO-GERÄTEBAU GmbH, 75038 Oberderdingen (DE)
(72) Erfinder: Kratel, Günter Dr., 87471 Durach (DE); Wilde, Eugen, 75438 Maulbronn (DE); Mikschl, Bernhard, 75056 Sulzfeld (DE); John, Erich, 75173 Pforzheim (DE); Pfob, Horst, 75031 Eppingen (DE)
(74) Vertreter: Patentanwälte Ruff, Wilhelm, Beier, Dauster & Partner

(57) **Zusammenfassung**

Ein Ausführungsbeispiel der Erfindung betrifft einen Wärmedämmformkörper (3) aus anorganischem Material, ein Verfahren zu seiner Herstellung und seine Verwendung. Der Formkörper ist ein Distanzhalter (3) für einen Strahlungsheizkörper eines Kochfeldes (8). Er ist durch folgende, gewichtsbezogene Zusammensetzung gekennzeichnet:
a) 40 Gew.-% Xonotlit,
b) 20 Gew.-% mikroporöse Metalloxide,
c) 37 Gew.-% IR - Trübungsmittel,
d) 3 Gew.-% anorganische SiO₂ - Fasern sowie
e) 10 g Wasser pro Distanzhalter (3)

Weiters ist er ohne Bindemittel, unter Ausschluss von Wasserglas und nur mit Wasser hergestellt.

## Beschreibung

Die Erfindung betrifft einen wärmedämmenden Formkörper aus anorganischem Material, der sich vorzugsweise als Distanzelement für Strahlungsheizkörper in Kochherden und Backöfen eignet.

Aus der DE 196 44 282 ist bereits ein wärmedämmender Formkörper aus geblähtem Vermiculite, anorganischem Bindemittel, Infrarottrübungsmittel, mikroporösem Material und Verstärkungsfasern bekannt. Als anorganisches Bindemittel wird vorzugsweise Wasserglas benutzt.

Aus der EP 623 567 ist ein Verfahren zur Herstellung eines Wärmeisolierkörpers aus pyrogener Kieselsäure, Trübungsmittel, organischen Fasern sowie einer oder mehrerer Verbindung(en) aus der Gruppe der Oxide, Hydroxide und Carbonate der Metalle der zweiten Hauptgruppe des Periodensystems bekannt. Der Anteil an pyrogener Kieselsäure ist hoch und wird in konkreten Ausführungsformen mit 50 bis 60 Gew.-% beziffert.

Bindemittel wie Wasserglas in der DE 196 44 282 enthalten Natriumund Kaliumionen, was dazu führt, dass das Material nicht elektrisch neutral ist und zudem, ähnlich wie pyrogene Kieselsäure, ein hohes Wasseradsorptionspotential besitzt. Aus den genannten Gründen kommt es bei den gegenwärtig als Wärmeisolierkörper eingesetzten Formkörpern zu folgenden Problemen:
- hohe Feuchtigkeitsaufnahme des Systems;
- eine Hochspannungsprüfung nach Schutzklasse 2 mit 3750 V zwischen Heizleiter und aufgestelltem Topf wird nur mit einer zusätzlichen Hochspannungsfase an der Ringoberseite bestanden;
- wegen des Ableitstroms bei der Hochspannungsprüfung (Schutzklasse 1 gegen geerdete Teile) sind Ausfräsungen im Bereich spannungsführender Teile erforderlich. Diese Ausfräsungen führen zu einem Energieleck;
- durch den Einsatz von Wasserglas sind die erforderlichen elektrischen Isoliereigenschaften nicht gewährleistet;
- die thermische Isolierung ist zu gering.

### Aufgabe und Lösung

Aufgabe der Erfindung ist es, einen wärmedämmenden Formkörper zu schaffen, der die genannten Nachteile vermeidet, insbesondere ohne Härtungsmittel auskommt.

Gelöst wird diese Aufgabe durch einen Wärmedämmformkörper mit den Merkmalen des Anspruchs 1 sowie ein Verfahren mit den Merkmalen des Anspruchs 9 und eine Verwendung mit den Merkmalen des Anspruchs 12. Vorteilhafte sowie bevorzugte Ausgestaltungen der Erfindung sind Gegenstand der weiteren Ansprüche und werden im folgenden näher erläutert. Der Wortlaut der Ansprüche wird durch ausdrückliche Bezugnahme zum Inhalt der Beschreibung gemacht.

Erfindungsgemäß ist der wärmedämmende Formkörper durch folgende, gewichtsbezogene Zusammensetzung gekennzeichnet:
a) 5 - 60 Gew.-% Xonotlit,
b) 5 - 60 Gew.-% mikroporöse Metalloxide,
c) 5 - 50 Gew.-% IR- Trübungsmittel,
d) 1 - 10 Gew.-% anorganische Fasern und
e) 1 - 25 Gew.-% Wasser.

Das erfindungsgemäße Verfahren zeichnet sich dadurch aus, dass die Mischung der fünf vorgenannten Anteile unter Beigabe von Wasser und ohne Härtungsmittel erfolgt. Die Beigabe von Wasser kann zusammen mit einem der Mischungsbestandteile oder separat erfolgen.

Der erfindungsgemäße Formkörper enthält 5 - 60 Gew.-%, bevorzugt 25 - 45 Gew.-%, an Xonotlit. Xonotlit ist ein hydratisches Calciumsilikat der Formel Ca₆Si₆0₁₇(OH)₂, dessen Herstellung aus der DE 3621705 bekannt ist, auf die hier ausdrücklich Bezug genommen wird. Unter dem Handelsnamen Promaxon (Hersteller Firma Promat) ist das Produkt in diversen Typen erhältlich.

Der Formkörper enthält 5 - 60 Gew.-% mikroporöse Metalloxide, vorzugsweise 10 - 30 Gew.-%. Vorzugsweise kommt pyrogene Kieselsäure mit einer BET-Oberfläche von 70 - 300 m²/g zum Einsatz. In einem bevorzugten Fall sind es 100 - 200 m²/g nach BET.

Der Formkörper enthält zur Verbesserung der Wärmeisolierung 5 - 50 Gew.-%, vorzugsweise 25 - 40 Gew.-%, an Trübungsmitteln. Geeignete Trübungsmittel sind beispielsweise TiO₂ -Modifikationen wie Rutil oder llmenit, ferner Zirkondioxid, Siliciumcarbid, Titanoxid, Zirkonoxid, Zirkonsilikat, Manganoxid und Eisen ll-/Eisen lll-Mischoxide. Dabei wird Zirkonsilikat besonders bevorzugt eingesetzt.

Ein Formkörper enthält 0,5 bis 10 Gew.-%, vorzugsweise 1,5 bis 5 Gew.-%, an anorganischen Fasern. Die Faserlänge liegt vorteilhaft zwischen 1 - 12 mm, vorzugsweise zwischen 2 - 7 mm. Bevorzugt werden Fasern aus SiO₂ wie Quarzglas, Kieselsäurefaser und artverwandte Gläser sowie beliebige Mischungen solcher Fasern.

Vorteilhaft wird der erfindungsgemäße Wärmedämmformkörper im wesentlichen, insbesondere komplett, unter Ausschluss von Wasserglas hergestellt. Das verbessert seine Eigenschaften weiter.

Ein gemäß einer Möglichkeit der Erfindung erzielter Vorteil besteht darin, dass der erfindungsgemäße Wärmedämmformkörper keine leitfähigen beweglichen lonen enthält. Dies bewirkt, dass Faktoren, die zu Problemen beim Ableitstrom führen können, wie beispielsweise lonen oder adsorbiertes Wasser, vermieden werden können. So sind z.B. sogenannte Hochspannungsfasen an der Ringoberseite sowie Ausfräsungen im Bereich spannungsführender Teile, die zu Energielecks führen, nicht mehr unbedingt nötig. Weitere Vorteile des Formkörpers sind eine hohe thermische Isolation bzw. Dämmung, geringe Feuchtigkeitsaufnahme, hohe Elastizität und eine gute Heizleiterverträglichkeit. Ein solcher Wärmedämmformkörper kann beispielsweise als Distanzelement in einem Strahlungsheizkörper verwendet werden.

Das Verfahren zur Herstellung des erfindungsgemäßen wärmedämmenden Formkörpers zeichnet sich dadurch aus, dass der Mischung aus anorganischen Komponenten 1 - 25 Gew.-%, bevorzugt 10 - 15 Gew.-%, Wasser hinzugefügt wird. Diese Mischung wird gepresst und schließlich bei einer Temperatur von 100 bis 300 C°, vorzugsweise 200 C°, getempert. Auf den Einsatz von Wasserglas wird dabei vorteilhaft im wesentlichen, insbesondere komplett, verzichtet.

Schließlich kann ein erfindungsgemässer Wärmedämmformkörper vorteilhaft als Distanzelement für einen Strahlungsheizkörper verwendet werden. Vorzugsweise wird ein solcher Strahlungsheizkörper mit dem Wärmedämmformkörper als Distanzelement, beispielsweise als die Heizelemente umgebender Ring, an die Unterseite eines Glaskeramikkochfeldes angedrückt.

Im folgenden wird ein Beispiel eines herkömmlichen Wärmedämmformkörpers und ein Vergleichsbeispiel eines erfindungsgemäßen Wärmedämmformkörpers wiedergegeben:

Die Versuche wurden mit einem Wärmedämmformkörper in Form eines Distanzringes eines Strahlungsheizkörpers mit einem Durchmesser von 180 mm durchgeführt. Die Mischungen wurden in einem Zyklonmischer bei 3000 U/min bei einem Einsatzgewicht von 1 kg für 5 min gemischt. Der Distanzhalter wurde auf einer hydraulischen Presse mit einem Druck von ca. 50 kg/cm² gepresst.

### 1) Vergleichsmischung:

| | |
|---|---|
| 36 Gew.-% Kieselsäure | BET-Oberfläche 200 m²/g |
| 1,5 Gew.-% SiO₂-Faser | |
| 35,5 Gew.-% Vermiculite | BET-Oberfläche 13 m²/g |
| 27 Gew.-% Kali-Wasserglas | |

Gewicht Distanzhalter 73 g
Dichte Distanzhalter 0,82 g/cm³

Messung der Tellertemperatur an der Außenseite bei einem Strahlungsheizkörper mit einer Leistung von 1800 W:

| | |
|---|---|
| Tellerbodentemperatur | 260 C° |
| Tellerrandtemperatur | 265 C° |

Messung der elektrischen Leitfähigkeit des Distanzhalters:
Der Distanzhalter wurde zwischen 2 Metallplatten in den Feuchtraum bei 30 C° und 93 % relativer Luftfeuchte gebracht. Danach wurde zwischen den beiden Metallplatten eine Spannung von 250 V angelegt und der durch den Distanzhalter fliessende Strom gemessen.

| | | |
|---|---|---|
| gemessener Strom nach | 24 h | 180 mA |

Messung der elastischen Verformbarkeit des Distanzhalters:
Der Distanzhalter wurde dabei durch einen Schrittmotor so lange verformt, bis sich Risse im Distanzhalter zeigten. Der Weg, bei dem Risse im Distanzhalter auftreten, ist ein Maß für die Elastizität des Distanzhalters:

| | |
|---|---|
| gemessener Weg: | 2,5 mm |

### 2) Erfindungsgemäße Mischung:

| | |
|---|---|
| 20 Gew.-% pyrogene Kieselsäure | BET-Oberfläche 130 m²/g |
| 3 Gew.-% SiO₂ -Faser | |
| 37 Gew.-% Zirkonsilikat | |
| 40 Gew.-% Xonotlit (Promaxon T) | BET-Oberfläche > 40 m²/g, |
| | oil absorbtion ± 200 |

10 g Wasser pro Distanzhalter
Gewicht des Distanzhalters 65 g
Dichte Distanzhalter 0,73 g/cm³

Messung der Tellertemperatur an der Außenseite bei einem Strahlungsheizkörper mit einer Leistung von 1800 W:

| | |
|---|---|
| Tellerbodentemperatur | 240 C° |
| Tellerrandtemperatur | 240 C° |

Messung der elektrischen Leitfähigkeit des Distanzhalters:
Der Distanzhalter wurde zwischen 2 Metallplatten in den Feuchtraum bei 30 C° und 93 % relativer Luftfeuchte gebracht. Danach wurde zwischen den beiden Metallplatten eine Spannung von 250 V angelegt und der durch den Ring fliessende Strom gemessen.

| | | |
|---|---|---|
| gemessener Strom nach | 24h | 5,5 mA |

Messung der elastischen Verformbarkeit des Distanzhalters:
Der Distanzhalter wurde durch einen Schrittmotor so lange verformt, bis sich Risse im Distanzhalter zeigten. Der Weg, bei dem Risse im Distanzhalter auftreten, ist ein Maß für die Elastizität des Distanzhalters.

| | |
|---|---|
| gemessener Weg | 3,5 mm |

Die elektrischen Isoliereigenschaften konnten also deutlich verbessert werden. Die thermische Isolation bzw. Dämmung konnte erheblich verbessert werden.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränkt die unter diesen gemachten Aussagen nicht in ihrer Allgemeingültigkeit.

### Kurzbeschreibung der Zeichnungen

Eine Ausführungsform der Erfindung ist in den Zeichnungen dargestellt. Diese zeigen:
- Fig. 1: einen Schnitt durch einen Strahlungsheizkörper mit einem erfindungsgemässen Wärmedämmformkörper und
- Fig. 2: eine Schrägansicht des Strahlungsheizkörpers aus Fig. 1.

### Detaillierte Beschreibung des Ausführungsbeispiels

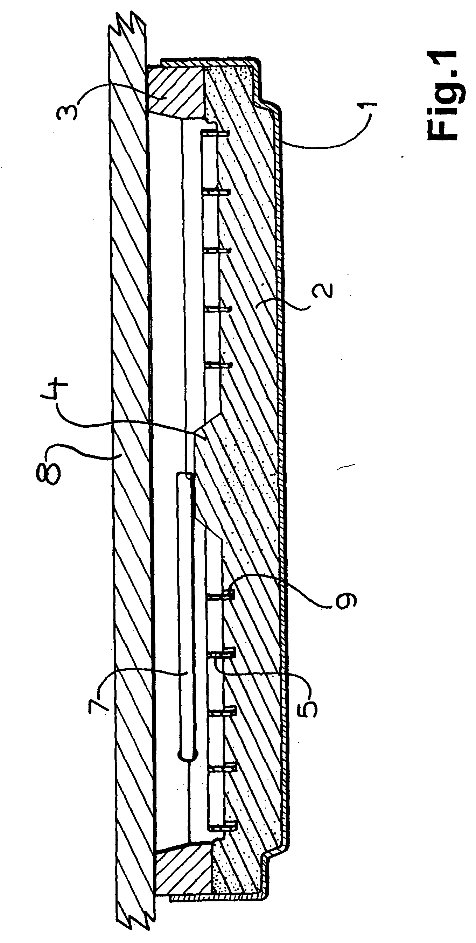

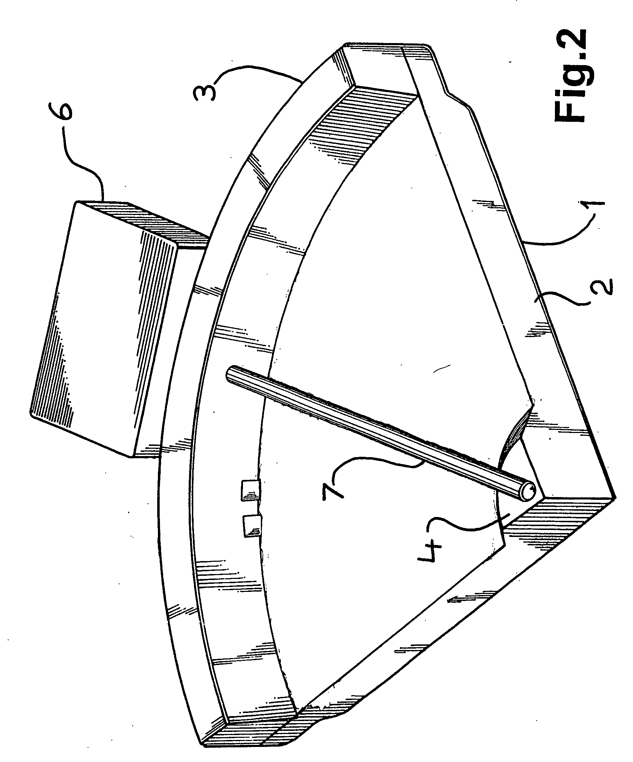

In den Figuren 1 und 2 ist jeweils ein elektrischer Strahlungsheizkörer dargestellt, der an die Unterseite einer Glaskeramikplatte 8 angedrückt ist. Der Strahlungsheizkörper weist eine Aufnahmeschale 1 auf, vorzugsweise aus Blech. In dieser ist ein Wärmedämmformkörper als Unterlage 2 eingelegt. Die Unterlage 2 trägt in Ausnehmungen 9 auf bekannte Art und Weise Heizleiter 5.

Im Mittelbereich weist die Unterlage 2 eine kegelstumpfförmige Erhebung 4 auf. Diese dient als Auflage für den Temperaturfühler 7 des Temperaturwächters 6. Dies ist aus dem Stand der Technik hinreichend bekannt.

Im Außenbereich der Unterlage 2 liegt auf dieser innerhalb der Aufnahmeschale 1 ein außen umlaufender Rand 3 auf. Dieser Rand 3 dient als Distanzelement, um den Strahlungsheizkörper in einem vorbestimmten Abstand zu der Glaskeramikplatte 8 zu halten. Ausserdem bildet sie eine Wärmedämmung zur Seite hin.

In Figur 2 ist der besseren Übersichtlichkeit halber auf die Darstellung der Heizleiter 5 sowie der zugehörigen Ausnehmungen 9 verzichtet worden.

Aus den Zeichnungen ist zu ersehen, dass die Anforderungen an die Wärmedämmung in Form der Unterlage 2 und des Distanzelements in Form des Randes 3 unterschiedlich sind. Die Unterlage 2 trägt den Heizleiter 5 und ist damit zum einen höheren Temperaturen ausgesetzt. Zum anderen muss sie zur Befestigung der Heizleiter 5 ausgebildet sein.

Der Rand 3 wiederum benötigt eine gewisse Festigkeit, vor allem Druckfestigkeit, um den Anpressdruck aufnehmen zu können. Dazu kommen Anforderungen an die Eigenschaften als Wärmedämmung.

## Patentansprüche

1. Wärmedämmformkörper, insbesondere als Distanzhalter (3) bei einem Strahlungsheizkörper für Kochherde (8) oder Backöfen, aus verpressten anorganischen Materialien folgender gewichtsbezogener Zusammensetzung:
a) 5 - 60 Gew.-% Xonotlit,
b) 5 - 60 Gew.-% mikroporöse Metalloxide,
c) 5 - 50 Gew.-% IR - Trübungsmittel,
d) 0,5 - 10 Gew.-% anorganische Fasern und
e) 1 - 25 Gew.-% Wasser.

2. Wärmedämmformkörper, nach Anspruch 1, **dadurch gekennzeichnet, dass** er kein Bindemittel enthält.

3. Wärmedämmformkörper nach Anspruch 1 oder 2, **dadurch gekennzeichnet, dass** das Fasermaterial SiO₂ -Glas ist, wobei vorzugsweise die Faserlänge 1 mm- 12 mm beträgt, insbesondere 2 mm -7 mm.

4. Wärmedämmformkörper nach einem der vorhergehenden Ansprüche, **gekennzeichnet durch** 8 - 15 Gew.-% Wasser, vorzugsweise ca. 10 Gew.-% Wasser.

5. Wärmedämmformkörper nach einem der vorhergehenden Ansprüche, **dadurch gekennzeichnet, dass** der Anteil des Xonotlit 5 - 60 Gew.-% beträgt, vorzugsweise 30 - 45 Gew.-%.

6. Wärmedämmformkörper nach einem der vorhergehenden Ansprüche, **dadurch gekennzeichnet, dass** das mikroporöse Metalloxid mindestens ein Element aus der folgenden Gruppe aufweist: Si0₂, Al₂O₃, gefällte Kieselsäure, Si-Aerogel, Lichtbogenkieselsäure.

7. Wärmedämmformkörper nach einem der vorhergehenden Ansprüche, **dadurch gekennzeichnet, dass** der Wärmedämmformkörper (3) als Trübungsmittel Metalloxide oder Metallcarbide aufweist, insbesondere Titandioxid, Siliciumcarbid, Zirkonsilikat, Ilmenit.

8. Wärmedämmformkörper, insbesondere nach einem der vorhergehenden Ansprüche, **dadurch gekennzeichnet, dass** der Wärmedämmformkörper (3) unter Ausschluss von Wasserglas hergestellt ist.

9. Verfahren zur Herstellung eines Wärmedämmformkörpers nach einem der vorhergehenden Ansprüche, **gekennzeichnet durch** folgende Verfahrensschritte:
a) Vermischen der anorganischen Komponenten einschließlich der Fasern
b) Vermischen der vorgenannten Anteile unter Zuhilfenahme von Wasser
c) Verpressen der Mischung
d) Erhitzen des Formteils (3).

10. Verfahren nach Anspruch 9, **dadurch gekennzeichnet, dass** die Mischung auf eine Temperatur zwischen 100 und 300 C°, vorzugsweise ca. 200 C°, erhitzt wird.

11. Verfahren nach Anspruch 9 oder 10, **dadurch gekennzeichnet, dass** der Wärmedämmformkörper (3) im wesentlichen, vorteilhaft komplett, unter Ausschluss von Wasserglas hergestellt wird.

12. Verwendung eines Wärmedämmformkörpers nach einem der vorhergehenden Ansprüche als Distanzelement (3) eines Strahlungsheizkörpers, vorzugsweise eines Strahlungsheizkörpers unter einem Glaskeramikkochfeld (8).
